# EUROPÄISCHE PATENTSCHRIFT

(11) **EP 3 576 922 B1**
(45) Veröffentlichungstag und Bekanntmachung des Hinweises auf die Patenterteilung: **09.06.2021**
(21) Anmeldenummer: 18701201.8
(22) Anmeldetag: 30.01.2018
(51) Int. Cl.: B29C 44/46, B29K 75/00, B05B 1/14, B29C 44/32

(54) **VERFAHREN UND VORRICHTUNG ZUR HERSTELLUNG VON SCHAUM-VERBUNDELEMENTEN**
METHOD AND SYSTEM FOR THE PREPARATION OF FOAM COMPOSITE ELEMENTS
PROCÉDÉ ET SYSTÈME DE FABRICATION D'ÉLÉMENTS COMPOSITES EN MOUSSE

(30) Priorität: 31.01.2017 EP 17154071
(43) Veröffentlichungstag der Anmeldung: 11.12.2019
(73) Patentinhaber: Covestro Intellectual Property GmbH & Co. KG, 51373 Leverkusen (DE)
(72) Erfinder: KUENZEL, Uwe, 51377 Leverkusen (DE); KOESTER, Ralf, 51379 Leverkusen (DE); SOBIK,Heinrich-Peter, 51375 Leverkusen (DE); RÜB, Thomas, 51375 Leverkusen (DE); LÖVENICH, Catherine, 51469 Bergisch Gladbach (DE)
(74) Vertreter: Levpat
(86) Internationale Anmeldenummer: PCT/EP2018/052247
(87) Internationale Veröffentlichungsnummer: WO 2018/141735

(56) Entgegenhaltungen:
- EP-A1- 2 614 943
- EP-A2- 0 553 695
- EP-A2- 1 857 248
- WO-A1-2016/037842
- DE-U1-202009 015 838
- US-A- 4 572 435
- US-A- 5 846 462

## Beschreibung

Die vorliegende Erfindung betrifft ein Verfahren und eine Vorrichtung zum Auftragen einer schäumbaren Reaktionsmischung auf ein sich bewegendes Deckschicht, wobei die Reaktionsmischung aus Austragsöffnungen auf die Deckschicht aufgetragen wird und die Deckschicht sich mit einer Geschwindigkeit von ≥ 15 Metern pro Minute relativ zu den Austragsöffnungen bewegt.

Verbundelemente aus einer Deckschicht und einem Isolierkern werden heutzutage in vielen Industriebereichen eingesetzt. Der grundlegende Aufbau solcher Verbundelemente besteht dabei aus einer Deckschicht, auf welche ein isolierend wirkender Werkstoff aufgebracht wird. Als Deckschichten können dabei beispielsweise Bleche aus beschichtetem Stahl, Edelstahl, Aluminium, Kupfer oder Legierungen der beiden letztgenannten eingesetzt werden. Darüber hinaus können auch Dämmplatten aus einer Kombination aus Deckschichten und Isolierkern hergestellt werden. Es können Kunststofffolien, Aluminiumfolien, Holz, Glasfaser- oder Mineralfaservliese sowie cellulosehaltige Materialien wie Papier, Pappe oder Pappmaché als Deckschichtmaterialien eingesetzt werden. Oft werden Mehrschichtdeckschichten aus z. B. Aluminium und Papier verwendet. Die Wahl des geeigneten Deckschichtmaterials hängt dabei von dem beabsichtigten Einsatzgebiet der Verbundelemente oder Dämmplatte und den sich daraus ergebenden Materialanforderungen ab. Als Isolierkern können insbesondere Schaumstoffe auf Basis von Polyurethan (PUR) und/oder Polyisocyanurat (PIR) eingesetzt werden.

Dämmplatten werden häufig im Haus- oder Wohnungs-Bau eingesetzt. Neben der Verwendung von Verbundelementen zur Isolierung von beispielsweise Kühlhäusern finden sie auch immer häufiger Anwendung als Fassadenelemente an Gebäuden oder als Elemente von Industrietüren wie beispielsweise Sektionaltore. Entsprechende Verbundelemente, im Folgenden auch als Sandwich-Verbundelemente bezeichnet, zeigen durch ihre Deckschicht eine dem verwendeten Material entsprechende Stabilität und Oberflächengestaltung, während der aufgebrachte Schaumstoff entsprechende wärmeisolierende Eigenschaften verleiht.

Zur Herstellung entsprechender Dämmplatten oder Verbundelemente wird auf eine bereitgestellte Deckschicht ein schäumendes Reaktionsgemisch mittels einer Auftragsvorrichtung aufgebracht. Hierzu werden zum Beispiel bei der Verwendung von Schaumstoffen auf Basis von Isocyanaten die entsprechenden Polyol-Komponenten und Isocyanat-Komponenten miteinander gemischt und auf die Deckschicht aufgetragen, auf welcher sie aufschäumen und aushärten.

Als Auftragsvorrichtung zur Aufbringung des schäumenden Reaktionsgemisches auf die Deckschicht kommen häufig Rohre zum Einsatz, welche entlang ihrer Längserstreckung mit einer Mehrzahl von Bohrungen versehen sind, aus welchen das in das Rohr eingebrachte Reaktionsgemisch austreten kann. Solche Rohre werden üblicherweise als Gießharken bezeichnet.

Für schnell laufende Produktionsverfahren für derartige Verbundelemente, sogenannte Schnellläufer, ist eine Technologie namens "6-Finger-Laydown" bekannt. Diese auch als "American" oder "US"-Technologie bezeichnete Vorgehensweise benutzt drei Mischköpfe mit jeweils zwei Austragsvorrichtungen pro Mischkopf. Man hat hier durch die drei Produktströme eventuell sehr unterschiedliche Auftragsmischungen (Reaktionsaktivitätszustände) über die Breite der Produktionsanlage, die zu Problemen mit zum Beispiel Abbläsern, Lunkern etc. führen können. Zusätzlich hat man oft Probleme mit dem Ver- und Ineinander-Laufen des aufsteigenden Reaktionsgemischs, was zu Dimensionsproblemen führen kann. Bei drei Mischköpfen mit ihren sechs Produktströmen können die ausgehärteten Schaumstränge im Endprodukt noch optisch wahrgenommen werden, was als nachteilig angesehen wird.

EP 1 857 248 A2 beschreibt eine Auftragsvorrichtung zur Herstellung von über die Reaktionsfläche gleichzeitig auftragenden und gleichmäßig aufschäumenden Schäumen, wobei die Vorrichtung einen Mischkopf, einen Verteilerkopf , mindestens 3 oder mehr an den Verteilerkopf angebrachte, Auslaufleitungen , die quer zur Ausströmrichtung an einem Gestell, das starr ist, befestigt sind, enthält. Eine Vorrichtung zur Herstellung von Sandwich-Verbundelementen oder Dämmplatten wird ebenfalls offenbart, welche wenigstens zwei Zuführvorrichtungen für eine obere und eine untere Deckschicht, ein umlaufendes Band zur Führung der Deckschichten, an die eine Auftragsvorrichtung für eine geschäumte Kernschicht, eine Formstrecke und eine Ablängvorrichtung hintereinander geschaltet sind.

WO 2010/089041 A2 offenbart eine Vorrichtung zum Auftragen von schäumbaren Reaktionsmischungen umfassend einen Mischkopf, einen strömungstechnisch hinter dem Mischkopf liegenden Verteilerkopf, mindestens drei an dem Verteilerkopf angebrachte Austrittleitungen, eine Zuleitung einer Komponente A zum Mischkopf, eine Zuleitung einer Komponente B zum Mischkopf, mindestens einen Statikmischer zur Durchmischung eines inerten Gases und der Komponente A, der Komponente B oder eines Gemisches der Komponenten A und B, mindestens eine Zuleitung auf der Hochdruckseite für das unter erhöhtem Druck stehende inerte Gas und mindestens eine Mess- und Regeleinheit zur Einstellung der gewünschten Drücke der Komponenten am Mischkopf.

EP 2 233 271 A1 betrifft eine Vorrichtung zum Auftrag von aufschäumenden Reaktionsgemischen umfassend (a) einen Mischkopf zum Vermischen von Rohmaterialien zur Herstellung des Schaums, (b) einen strömungstechnisch hinter dem Mischkopf liegenden Verteilerkopf, (c) mindestens drei an dem Verteilerkopf angebrachte Schlauchleitungen und (d) mindestens drei stationäre Gießharken zum Auftragen des Gemischs der Rohmaterialien zur Schaumbildung auf ein bewegtes Deckschicht.

EP 2 614 944 A1 beschreibt eine Vorrichtung zum Auftragen eines aufschäumenden Reaktionsgemisches auf eine Deckschicht , insbesondere zur Herstellung eines Verbundelementes, umfassend mindestens eine Gießharke mit einem rohrförmigen Hohlkörper, welcher Hohlkörper sich entlang einer Mittelachse erstreckt und wenigstens zwei Austrittsöffnungen zum Austritt des aufschäumenden Reaktionsgemisches aufweist, und wobei die Gießharke und die Deckschicht in einer Längsachse relativ zueinander bewegbar sind. Die Mittelachs der mindestens einen Gießharke und die Längsachse der Bewegung schließen einen Winkel von ≤ 80° zueinander ein.

EP 2 804 736 A1 offenbart eine Vorrichtung zum Auftragen eines aufschäumenden Reaktionsgemisches auf eine Deckschicht, insbesondere zur Herstellung eines Verbundelementes, mindestens umfassend zwei Gießharken mit jeweils einem rohrförmigen Hohlkörper, welcher Hohlkörper sich entlang einer Mittelachse erstreckt und wenigstens zwei Austrittsöffnungen zum Austritt des aufschäumenden Reaktionsgemisches aufweist, wobei die Gießharken und die Deckschicht in einer Längsachse relativ zueinander bewegbar sind und wobei die Gießharken an einem Aufnahmeelement angeordnet sind. Die Anordnung der Gießharken am Aufnahmeelement weist jeweils ein Gelenk auf, mittels dem die Gießharken beweglich am Aufnahmeelement angeordnet sind und in einem Winkel von ≤ 80° zur Längsachse der Bewegung ausrichtbar sind.

Die Verwendung dieser Auftragstechnologien findet jedoch ihr Limit, regelmäßig sichtbar an mangelhafter Homogenität der hergestellten Schäume, wenn Verbundelemente wie Dämmplatten in sehr schnell laufender Produktionsweise hergestellt werden sollen und Reaktionsgemische mit sehr kurzen Startzeiten verarbeitet werden sollen.

Als alternative Auftragstechnologie kann die sogenannte Kalibrierung verwendet werden. Diese führt zwar zu einer sehr hohen optischen Qualität, aber die Beherrschung des Verfahrens in der Produktion ist sehr schwierig.

Auch die WO 2016/37842 A hat sich zur Aufgabe gestellt, die Probleme des Stands der Technik zu überwinden. Hierfür schlägt sie die Verwendung von Gießharken vor, deren Geometrie mit Hilfe einer Simulation ausgelegt wird, in die unterschiedliche Parameter wie z.B. Paneelbreite, Durchflussmenge, Geschwindigkeit des Produktionsbandes und Viskosität der Reaktionsmischung einfließen. Es liegt auf der Hand, dass hierdurch die Flexibilität des Anwendungsprozesses deutlich reduziert wird, wenn eine oder mehrere Parameter geändert werden sollen.

Die vorliegende Erfindung hat sich die Aufgabe gestellt, die Nachteile im Stand der Technik zumindest teilweise zu beheben. Insbesondere hat sie sich die Aufgabe gestellt, eine homogenere Produktqualität über die Breite einer Dämmplatte oder eines Schaum-Verbundelements zu erreichen.

Erfindungsgemäß gelöst wird die Aufgabe durch ein Verfahren gemäß Anspruch 1 und eine Vorrichtung gemäß Anspruch 5. Vorteilhafte Weiterbildungen sind in den Unteransprüchen angegeben.

Die Erfindung betrifft ein Verfahren zum Auftragen einer schäumbaren Reaktionsmischung auf ein sich bewegendes Deckschicht, wobei die Reaktionsmischung aus Austragsöffnungen auf die Deckschicht aufgetragen wird und die Deckschicht sich mit einer Geschwindigkeit von ≥ 15 Metern pro Minute relativ zu den Austragsöffnungen bewegt, wobei die Reaktionsmischung aus ≥ 7 Austragsöffnungen gleichzeitig auf die Deckschicht aufgetragen wird.

Durch eine Verbesserung der Vorverteilung des Reaktionsgemischs in den Inhalt dieser Erfindung lässt sich der Prozess wesentlich einfacher steuern und führt nach einer kürzeren Anlaufphase in der Produktion zu einer besseren Produktqualität.

Das erfindungsgemäße Verfahren ist vorzugsweise ein kontinuierliches Verfahren. Es eignet sich zur Herstellung von Schaum-Verbundelementen wie Dämmplatten in schnell laufender Produktionsweise. Die Deckschichtgeschwindigkeit beträgt dickenabhängig beispielsweise ≥ 10 bis ≤ 70 Meter pro Minute, vorzugsweise ≥ 15 Meter pro Minute, mehr bevorzugt ≥ 30 Meter pro Minute.

Als Deckschicht oder Substrat eignen sich beispielsweise Metall-Folien, insbesondere AluminiumFolien, Mehrschichtdeckschichten, z. B. aus Aluminium und Papier, und Kunststoff-Folien. Die Breite der Deckschicht ist grundsätzlich nicht beschränkt. Beispielsweise kann die Deckschicht eine Breite zwischen 1000 und 1300 mm aufweisen, aber auch 2400 mm Breite sind möglich.

Als Reaktionsmischung kommt insbesondere eine zu einem Polyurethan- und/oder Polyisocyanuratschaum reagierende Mischung in Frage. In einer Ausführungsform des erfindungsgemäßen Verfahrens umfasst daher die Reaktionsmischung ein Polyol A), ein Polyisocyanat B), gegebenenfalls Additive wie z. B. Stabilisatoren und Katalysatoren, gegebenenfalls ein oder mehrere Flammschutzmittel und ein (oder mehrere) Treibmittel C). Vorzugsweise ist das Polyol A) ausgewählt aus der Gruppe der Polyetherpolyole, Polyesterpolyole, Polycarbonatpolyole und /oder Polyetheresterpolyole. Die OH-Zahl des eingesetzten Polyols oder der eingesetzten Polyole kann beispielsweise > 100 mg KOH/g bis < 800 mg KOH/g betragen und die durchschnittliche OH-Funktionalität des eingesetzten Polyols oder der der eingesetzten Polyole ist ≥ 2. Die OH-Zahl gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der Polyole liegt beispielsweise in einem Bereich von ≥ 2 bis < 6.

Verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid, Butylenoxide und oder Epichlorhydrin an di- oder polyfunktionelle Startermoleküle. Meistens werden Polyetherpolyole mit Ethylenoxid oder Propylenoxid als Kettenverlängerer verwendet.

Geeignete Startermoleküle sind zum Beispiel Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,3-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie Benzoesäure und Hexancarbonsäure mit verwendet werden. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe. Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen oder aus Kohlendioxid erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art. Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit > 4 bis < 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit > 1 bis < 4 Kohlenstoffatomen eingesetzt werden.

Beispiele von geeigneten Polyisocyanaten B) sind 1,4-Butylendiisocyanat, 1,5-Pentandiisocyanat, 1,6- Hexamethylendiisocyanat (HDI), Isophorondiisocyanat (IPDI), 2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclobexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe (polymeres MDI, pMDI), 1,3- und/oder 1,4-Bis-(2-isocyanato-prop-2-yl)-benzol (TMXDI), 1 ,3-Bis-(isocyanatomethyl)benzol (XDI), sowie Alkyl-2,6-diisocyanatohexanoate (Lysindiisocyanate) mit C1 bis C6-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 110 bis 600 führen. Bevorzugt zwischen 115 und 400. Diese Kennzahl kann auch in einem Bereich von > 180:100 bis < 330:100 oder aber auch von > 90:100 bis < 140:100 liegen.

Die Reaktionsmischung enthält weiterhin so viel Treibmittel C), wie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Komponente A. Als Treibmittel werden vorzugsweise physikalische Treibmittel ausgewählt aus wenigstens einem Mitglied der Gruppe bestehend aus Kohlenwasserstoffen, halogenierten Ethern und perfluorierten Kohlenwasserstoffen mit 1 bis 8 Kohlenstoffatomen eingesetzt. Unter "physikalischen Treibmitteln" werden im Rahmen der vorliegenden Offenbarung solche Verbindungen verstanden, die aufgrund ihrer physikalischen Eigenschaften leicht flüchtig sind und nicht mit der Isocyanatkomponente reagieren. Bevorzugt sind die einzusetzenden physikalischen Treibmittel ausgewählt aus Kohlenwasserstoffen (z. B. n-Pentan, iso-Pentan, cycloPentan, Butan, Isobutan), Ethern (z. B. Methylal), halogenierten Ethern, perfluorierte Kohlenwasserstoffe mit 1 bis 8 Kohlenstoffatomen (z. B. Perfluorhexan), sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie der Einsatz von Kombinationen dieser Treibmittel. In besonders bevorzugten Ausführungsformen wird als Treibmittel C) ein Pentanisomer oder ein Gemisch verschiedener Pentanisomeren eingesetzt. Außerordentlich besonders bevorzugt wird Cyclopentan als Treibmittel C) eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden.

Insbesondere bevorzugt ist auch der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4oder2)-(trifluormethyl)pent-2-en und/oder 1,1,1,3,4,4,5,5,5- Nonafluor-4(oder2)-(trifluormethyl)pent-2-en), allein oder in Kombination mit anderen Treibmitteln. Diese haben den Vorteil, ein besonders niedriges Ozonabbaupotential (ODP) aufzuweisen und ein besonders niedriges Treibhauspotential (GWP) zu besitzen. Mit dem erfindungsgemäßen Verfahren lassen sich (hydro)fluorierte Olefine in vorteilhafter Weise als Treibmittel für Verbundsysteme einsetzen, da sich im Vergleich zu mit anderen Auftragstechniken hergestellten Verbundelementen Verbundelemente mit besseren Oberflächenstrukturen und verbesserter Haftung zur Deckschicht herstellen lassen.

Zusätzlich oder auch statt der oben aufgeführten physikalischen Treibmittel können auch chemische Treibmittel (auch "Co- Treibmittel") verwendet werden. Bei diesen handelt es sich besonders bevorzugt um Wasser und / oder Ameisensäure. Vorzugsweise werden die chemischen Treibmittel zusammen mit physikalischen Treibmitteln verwendet. Bevorzugt werden die Co-Treibmittel in einer Menge bis 6 Gew.-%, besonders bevorzugt 0,5 bis 4 Gew.-% für die Verbundelemente, bezogen auf die Gesamtmenge an Verbindungen mit gegenüber Isocyanatgruppen reaktiven Wasserstoffatomen in der Komponente A.

Bevorzugt wird für Verbundelemente eine Mischung aus 0 und 6,0 Gew.-% an Co-Treibmittel und 1,0 bis 30,0 Gew.-% an Treibmittel, jeweils bezogen auf 100 Gew.-% der Komponente A, eingesetzt. Das Mengenverhältnis von Co-Treibmittel zu Treibmittel kann aber auch je nach Bedarf von 1:7 bis 1:35 betragen.

Das Reaktionsgemisch enthält weiterhin gegebenenfalls eine Katalysatorkomponente D), welche geeignet ist, die Treibreaktion, die Urethanreaktion und / oder die Isocyanuratreaktion (Trimerisierung) zu katalysieren. Die Katalysatorkomponenten können dem Reaktionsgemisch zudosiert oder auch ganz oder teilweise in der Isocyanat-reaktiven Komponente A) vorgelegt werden.

Hierfür geeignet sind insbesondere eine oder mehrere katalytisch aktive Verbindungen ausgewählt aus den folgenden Gruppen:
D1) Aminische Katalysatoren, z.B. Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'- Tetramethylethylendiamin, N,N,N',N'-Tetramethylbutandiamin, N,N,N',N'-Tetramethylhexandiamin-1,6, Pentamethyldiethylentriamin, Bis(2-dimethylaminoethyl)ether, Bis-(dimethylaminopropyl)-harnstoff, Dimethylpiperazin, 1,2-Dimethyl-imidazol, N,N',N"-Tris-(dimethylaminopropyl)hexahydrotriazin, Bis[2-(N,N-dimethylamino)ethyl]ether, 1-Aza-bicyclo-(3,3,0)-octan und 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin. Besonders geeignete Verbindungen sind ausgewählt aus der Gruppe umfassend tertiäre Amine, wie Triethylamin, Tributylamin, Dimethylcyclohexylamin, Dimethylbenzylamin, N,N,N',N'- Tetramethylethylendiamin, Pentamethyldiethylentriamin, Bis(2-dimethylaminoethyl)ether, Dimethylpiperazin, 1,2-Dimethyl-imidazol und Alkanolaminverbindungen, wie Tris(dimethylaminomethyl)phenol, Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin,

In einer besonders bevorzugten Ausführungsform werden in der Katalysatorkomponente ein oder mehrere aminische Verbindungen gemäß folgender Struktur eingesetzt:

(CH3)2N-CH2-CH2-X-CH2-CH2-Y

wobei Y = NR2 oder OH, vorzugsweise Y = N(CH3)2 oder OH, besonders bevorzugt Y = N(CH3)2
und wobei X= NR oder O, vorzugsweise X= N-CH3 oder O, besonders bevorzugt X= N-CH3. Dabei ist jedes R unabhängig von jedem anderen R wählbar und stellt einen beliebig aufgebauten
organischen Rest mit mindestens einem C-Atom dar. Vorzugsweise ist R eine Alkylgruppe mit 1 bis 12 C-Atomen, insbesondere C1- bis C6-Alkyl, besonders bevorzugt Methyl und Ethyl, insbesondere Methyl.

D2) Carboxylate von Alkali- oder Erdalkalimetallen, insbesondere Na¬trium¬acetat, Natriumoctoat, Kaliumacetat, Kaliumoctoat, sowie Zinncarboxylate, z.B.. Zinn-(II)-acetat, Zinn-(II)-octoat, Zinn-(II)-ethylhexoat, Zinn-(II)-laurat, Dibutyl¬zinndiacetat, Di¬butyl¬zinndilaurat, Dibutylzinnmaleat und Dioctyl¬zinndiacetat. und Ammoniumcarboxylate. Insbesondere bevorzugt sind Natrium-, Kalium- und Ammoniumcarboxylate. Bevorzugte Carboxylate sind Formiate, Ethylhexanoate (=Octoate) und Acetate.

Bevorzugt enthält der Katalysator einen oder mehrere Katalysatoren ausgewählt aus der Gruppe bestehend aus Kaliumacetat, Kaliumoctoat, Penta¬methyl¬diethylentriamin, N,N',N"-Tris-(dimethylaminopropyl)hexahydrotriazin, Tris(dimethylaminomethyl)phenol, Bis[2-(N,N-dimethylamino)ethyl] ether und N,N-Dimethylcyclohexylamin, besonders bevorzugt aus Penta¬methyl¬diethylentriamin, N,N',N"-Tris-(dimethylaminopropyl)hexahydrotriazin und N,N-Dimethylcyclohexylamin, besonders besonders bevorzugt aus Penta¬methyl¬diethylentriamin, N,N',N"-Tris-(dimethylaminopropyl)hexahydrotriazin und N,N-Dimethylcyclohexylamin in Kombination mit Kaliumacetat, Kaliumoctoat oder Kaliumformiat oder Natriumformiat

Die zur Herstellung des Hartschaumstoffes nötigen Katalysatoren, insbesondere aminische Katalysatoren (D1) in Kombination mit als Trimerisationskatalysatoren eingesetzten Salze, werden in einer bevorzugten Ausführungsform in solcher Menge eingesetzt, dass z.B. auf kontinuierlich produzierenden Anlagen Elemente mit flexiblen Deckschichten mit Geschwindigkeiten bis zu 80 m/min je nach Elementstärke produziert werden können.

Die Reaktivität der Reaktionsmischung wird i.d.R. mittels Katalysator (oder über andere die Reaktivität erhöhende Komponenten, z.B. Aminopolyether), auf die Bedürfnisse angepasst. So verlangt die Herstellung von dünnen Platten ein Reaktionsgemisch mit einer höheren Reaktivität als die Herstellung von dickeren Platten. Typische Parameter sind die Startzeit und die Abbindezeit als Maß für die Zeit, zu der das Reaktionsgemisch zu reagieren beginnt, und für den Zeitpunkt, an dem ein hinreichend stabiles Polymernetzwerk gebildet ist. Typische Startzeiten (gekennzeichnet durch den Beginn des Aufschäumens der Reaktionsmischung bei visueller Beurteilung) für die Verarbeitung mittels konventioneller Technik liegen im Bereich von 2s bis 50s.

Mittels erfindungsgemäßem Verfahren lassen sich nun auch Reaktionsgemische mit hohen bzw. höheren Reaktivitäten, d.h. Startzeiten von <5s, insbesondere <2s, ganz besonders < 1s und Abbindezeiten von <25 s, insbesondere <20s und ganz besonders <14s vorteilhaft verarbeiten. Das erfindungsgemäße Verfahren kann insbesondere für die Herstellung von dünnen Platten vorteilhaft sein, da hier wenig Material für das Zusammenfließen zur Verfügung steht.

Bevorzugt wird eine Kombination aus Katalysatorkomponenten D1 und D2 in dem Reaktionsgemisch verwendet. In diesem Fall sollte das molare Verhältnis so gewählt sein, dass das Verhältnis von D2/D1 zwischen 0,1 und 80 liegt, insbesondere zwischen 2 und 20. Kurze Abbindezeiten können zum Beispiel mit mehr als 0,9 Gew.-% Kalium-2-ethylhexanoat bezogen auf alle Komponenten des Reaktionsgemisches erzielt werden.

Es ist vorgesehen, dass die Reaktionsmischung aus ≥ 7 Austragsöffnungen gleichzeitig auf die Deckschicht aufgetragen wird. Je höher die Anzahl der Austragsöffnungen ist, desto geringer werden die Abweichungen der Produktqualität im Querschnitt des erhaltenen Verbundelements (quer zur Bewegungsrichtung der Deckschicht gesehen) ausfallen. Vorzugsweise wird die Reaktionsmischung aus 8 Austragsöffnungen gleichzeitig auf die Deckschicht aufgetragen, mehr bevorzugt aus ≥ 12 Austragsöffnungen gleichzeitig auf die Deckschicht aufgetragen, noch mehr bevorzugt aus ≥ 15 Austragsöffnungen.

Die erfindungsgemäße Vorrichtung gemäß Anspruch 5 ist zur Durchführung des erfindungsgemäßen Verfahrens geeignet. In einer solchen Vorrichtung zum Auftragen einer schäumbaren Reaktionsmischung auf eine sich bewegende Deckschicht, wobei die Reaktionsmischung aus Austragsöffnungen auf die Deckschicht aufgetragen wird, umfasst die Vorrichtung ≥ 7 Austragsöffnungen. Vorzugsweise umfasst die Vorrichtung ≥ 8 Austragsöffnungen, mehr bevorzugt aus ≥ 12 und noch mehr bevorzugt ≥ 15 Austragsöffnungen.

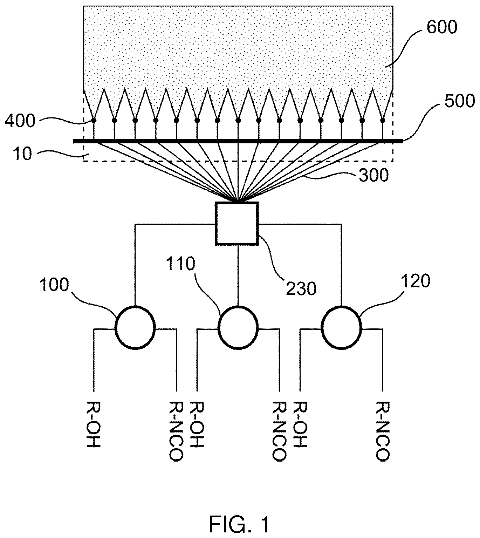

Die vorliegende Erfindung wird anhand der nachfolgenden Figuren näher erläutert, ohne jedoch darauf beschränkt zu sein, wobei der Schutzumfang in den beigefügten Ansprüchen definiert ist. FIG. 1-5 zeigen offenbarte Vorrichtungen bei der Durchführung von offenbarten Verfahren. Unter Bezugnahme auf FIG. 1 soll eine Ausführungsform der erfindungsgemäßen Vorrichtung und des erfindungsgemäßen Verfahrens erläutert werden. Die erfindungsgemäße Vorrichtung ist im Anspruch 5 definiert und umfasst weiterhin:
- Eine Mehrzahl von Mischköpfen 100, 110, 120, wobei jeder Mischkopf eingerichtet ist, um zwei oder mehr Eduktströme zu einem Produktstrom zu mischen;
- Einen Verteiler 230, wobei der Verteiler ≥ 7 Austragsleitungen 300 aufweist, welche jeweils in einer Austragsöffnung 400 enden, der Verteiler mit den Produktströmen der Mischköpfe 100, 110, 120 verbunden ist und der Verteiler eingerichtet ist, um die Produktströme der Mischköpfe 100, 110, 120 zu vereinigen und hinsichtlich der stofflichen Zusammensetzung homogen auf seine Austragsleitungen 300 zu verteilen.

Hier dargestellt ist ein Vorrichtung mit drei Mischköpfen 100, 110 und 120. Jeder dieser drei Mischköpfe empfängt einen Produktstrom mit einer Polyolkomponente R-OH und einen Produktstrom mit einer Isocyanatkomponente R-NCO. Die Bezeichnungen R-OH und R-NCO stehen selbstverständlich nicht für Monoalkohole und Monoisocyanate, sondern allgemein für Polyole und Polyisocyanate und in diesen Eduktströmen weiterhin vorhandenen Treibmitteln und sonstigen Additiven.

Die Mischköpfe 100, 110, 120 vereinigen ihre Eduktströme zu Produktströmen, die einem mit den Mischköpfen verbundenen Verteiler 230 zugeführt werden. Der Verteiler 230 weist daher mindestens so viele Eingänge auf, wie Mischköpfe vorhanden sind. Die Produktströme enthalten somit die schäumbare Reaktionsmischung. In dem Verteiler 230 erfolgt eine Homogenisierung des Produktstroms, so dass beispielsweise Unterschiede im zeitlichen Reaktionsfortschritt oder zeitlich bedingte Unterschiede in den Eigenschaften der Eduktströme ausgeglichen werden. Bei zeitlich bedingten Unterschieden in den Eigenschaften der Eduktströme kann es sich beispielsweise um solche Unterschiede handeln, die auf Dichteschwankungen oder auf Schwankungen in der Förderleistung der Eduktströme zu den Mischköpfen beruhen.

Die Geometrie des Verteilers ist bevorzugt so gewählt, dass die Wegstrecke der homogenisierten Reaktionsmischung zu den Austragsleitungen gleich lang ist. Des Weiteren ist es vorteilhaft, wenn der Querschnitt der Verteilerausgänge bei allen Verteilerausgängen identisch ist. Die Querschnitte der Verteilereingänge können dagegen auch unterschiedlich sein. Das Material des Verteilers kann ausgewählt sein aus Stahl, Edelstahl, Aluminium und Kunststoffen. In jedem Fall muss das ausgewählte Material den im Mischkopf herrschenden Drücken und Temperaturen standhalten.

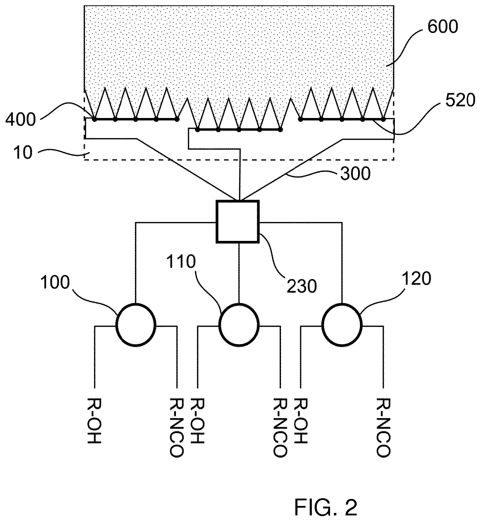

In einer bevorzugten Ausführungsform kann ein Verteiler 230 z.B. so aufgebaut sein, dass zwei Verteilerköpfe, wie sie beispielswiese in der EP 1 857 248 A2 ([0023], Fig. 1) unter der Bezeichnung "Verteilerkopf" beschrieben sind, hintereinandergeschaltet werden. Dabei wird der erste Verteilerkopf in umgedrehter Richtung durchströmt, d.h. die aus den Mischköpfen kommenden Produktströme treten über die mehreren Öffnungen in den ersten (umgedrehten) Verteilerkopf ein, werden dort homogenisiert und verlassen den Verteilerkopf als ein Produktstrom, der dann in einen weiteren Verteilerkopf eintritt, wo er wieder auf mehrere Produktströme verteilt wird. Dies ist in FIG 2 detaillierter dargestellt.

Die Reaktionsmischung verlässt den Verteiler 230 über ≥ 7 Austragsleitungen 300, welche jeweils in Austragsöffnungen 400 enden. In der in FIG. 1 dargestellten Ausführungsform weist der Verteiler fünfzehn Austragsleitungen 300 auf. Die Austragsleitungen 300 können flexibel oder starr ausgeführt sein, wobei flexible Austragsleitungen bevorzugt sind. Die Austragsleitungen 300 sind auf einer Befestigungsschiene 500 angebracht, wodurch die Position der Austragsöffnungen 400 fixiert wird.

Die Reaktionsmischung verlässt die einzelnen Austragsöffnungen 400 und kontaktiert eine durch ihren gestrichelten Umriss dargestellte, sich von den Austragsöffnungen fortbewegende Deckschicht 10 im Wesentlichen in ihrer gesamten Breite. Durch die Expansion der schäumenden Reaktionsmischung vereinigen sich die einzelnen Streifen der Reaktionsmischung zur Schaumschicht 600 auf der Deckschicht.

Die mit dem zuvor diskutierten Vorrichtung durchführbare Ausführungsform des erfindungsgemäßen Verfahrens , die im Anspruch 1 definiert ist, umfasst die Schritte:
- Bereitstellen einer Mehrzahl von Mischköpfen 100, 110, 120, wobei jeder Mischkopf eingerichtet ist, um zwei oder mehr Eduktströme zu einem Produktstrom zu mischen;
- Bereitstellen eines Verteilers 230, wobei der Verteiler ≥ 7 Austragsleitungen 300 aufweist, welche jeweils in einer Austragsöffnung 400 enden, der Verteiler mit den Produktströmen der Mischköpfe 100, 110, 120 verbunden ist und der Verteiler eingerichtet ist, um die Produktströme der Mischköpfe 100, 110, 120 zu vereinigen und hinsichtlich der stofflichen Zusammensetzung homogen auf seine Austragsleitungen 300 zu verteilen;
- Mischen von zwei oder mehr Eduktströmen in jedem der Mischköpfe 100, 110, 120 unter Erhalt eines jeden der Mischköpfe verlassenden Produktstroms, wobei der Produktstrom eine schäumbare Reaktionsmischung umfasst;
- Vereinigen der Produktströme in dem Verteiler 230;
- Verteilen der vereinigten Produktströme auf die Austragsleitungen 300 des Verteilers 230;
- Auftragen der Reaktionsmischung aus den Austragsöffnungen 400 der Austragsleitungen 300 auf die Deckschicht 10.

Die Anzahl der Mischköpfe in diesen Ausführungsformen der erfindungsgemäßen Vorrichtung und des erfindungsgemäßen Verfahrens kann 2, 3 (wie hier dargestellt), 4, 5, 6 oder noch größer sein. Die Anzahl der Austragsleitungen pro Verteiler kann 7, 8, 9, 10, 11, 12, 13, 14, 15 (wie hier dargestellt) oder noch größer sein.

Bei dieser Ausführungsform werden ebenfalls die Unterschiede zwischen den ursprünglichen Reaktionsgemischen ausgeglichen und Probleme mit Verlaufen und Ineinander-Laufen des aufsteigenden Reaktionsgemischs sehr deutlich reduziert. Diese Ausführungsform hat den zusätzlichen Vorteil, dass man im Grunde nur mit einer Qualität des Reaktionsgemischs arbeiten muss. Ein weiterer Vorteil gegenüber bestehenden Auslaufsystemen ist, dass man eine genaue Positionierung der Auslaufströme, sowohl symmetrisch als auch asymmetrisch, durch die Verwendung von vorzugsweise flexiblen Schläuchen erreichen kann. Dieses kann zu Vorteilen in der Plattengeometrie führen oder es erlaubt eine gezielte Produktaufbringung, zum Beispiel in den Sicken eines Dachelements. Diese Auftragsmethodik kann für die Herstellung von Metallpaneel-Sandwichverbundelementen, Dämmplatten und Konti-Blöcken verwendet werden.

Unter Bezugnahme auf FIG. 2,FIG. 3, FIG.4 und FIG. 5 sollen weitere Ausführungsformen der Vorrichtung und des Verfahrens erläutert werden. Die erfindungsgemäße Vorrichtung ist im Anspruch 5 definiert und umfasst:
- Eine Mehrzahl von Mischköpfen 100, 110, 120, wobei jeder Mischkopf eingerichtet ist, um zwei oder mehr Eduktströme zu einem Produktstrom zu mischen;
- Einen Verteiler 230, wobei der Verteiler eine oder mehrere Austragsleitungen (300) aufweist, der Verteiler mit den Produktströmen der Mischköpfe (100, 110, 120) verbunden ist und der Verteiler eingerichtet ist, um die Produktströme der Mischköpfe (100, 110, 120) zu vereinigen und hinsichtlich der stofflichen Zusammensetzung homogen auf die eine oder mehrere Austragsleitungen (300) zu verteilen.
- Eine oder mehrere Gießharken 510, 520, wobei die Anzahl der Gießharken der Anzahl der Austragsleitungen 300 des Verteilers 230 entspricht, jede Gießharke mit einer Austragsleitung verbunden ist und jede Gießharke ≥ 4 Austragsöffnungen (400) aufweist.

Hier einsetzbare Gießharken können beispielsweise als Einzelgießharke oder Gießharkenpaare, wie in EP 1 857 248 A2, EP 2 614 944 A1 oder EP 2 804 736 A1 beschrieben, ausgeführt sein. Der Zulauf zu der/den Gießharken kann beispielsweise mittig oder seitlich sein.

In FIG. 2, FIG. 3, FIG.4 und FIG. 5 dargestellt ist jeweils eine Vorrichtung mit drei Mischköpfen 100, 110 und 120. Jeder dieser drei Mischköpfe empfängt einen Produktstrom mit einer Polyolkomponente R-OH und einen Produktstrom mit einer Isocyanatkomponente R-NCO. Die Bezeichnungen R-OH und R-NCO stehen selbstverständlich nicht für Monoalkohole und Monoisocyanate, sondern allgemein für Polyole und Polyisocyanate und in diesen Eduktströmen weiterhin vorhandenen Treibmitteln und sonstigen Additiven.

Die Mischköpfe 100, 110, 120 vereinigen ihre Eduktströme zu Produktströmen, die einem mit den Mischköpfen verbundenen Verteiler 230 zugeführt werden. Die Produktströme enthalten somit die schäumbare Reaktionsmischung. In dem Verteiler 230 erfolgt eine Homogenisierung des Produktstroms, so dass beispielsweise Unterschiede im zeitlichen Reaktionsfortschritt oder zeitlich bedingte Unterschiede in den Eigenschaften der Eduktströme ausgeglichen werden. Bei zeitlich bedingten Unterschieden in den Eigenschaften der Eduktströme kann es sich beispielsweise um solche Unterschiede handeln, die auf Dichteschwankungen oder auf Schwankungen in der Förderleistung der Eduktströme zu den Mischköpfen beruhen.

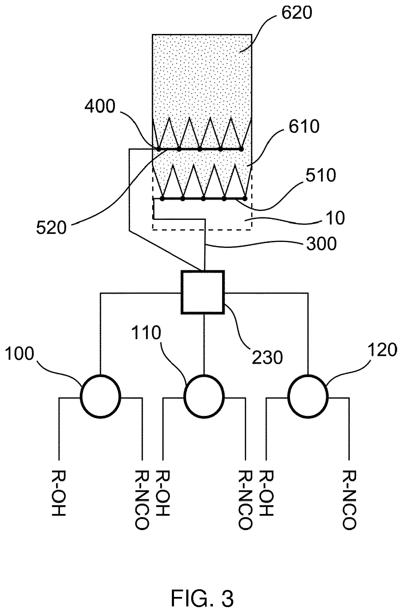

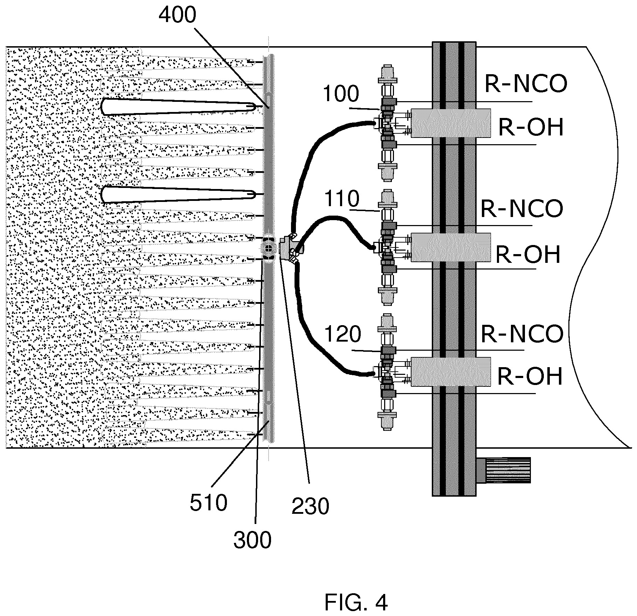

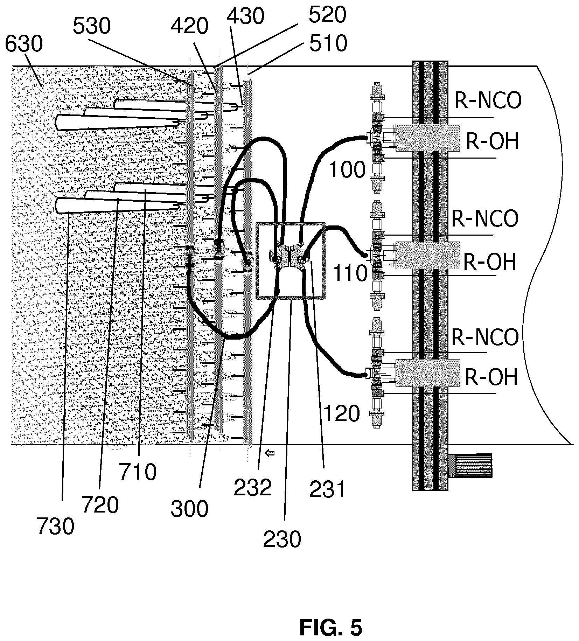

Die Reaktionsmischung verlässt den Verteiler 230 über Austragsleitungen 300, welche jeweils in Gießharken 500, 510, 520, 530 mit Austragsöffnungen 400, 410, 420, 430 enden. In der in FIG. 2 dargestellten Ausführungsform weist der Verteiler drei Austragsleitungen 300 auf, in der in FIG. 3 dargestellten Ausführungsform sind es eine oder mehr Austragsleitungen 300, in FIG. 4 ist es eine Austragsleitung, welche in dem dargestellten beispielhaften Fall einen direkten Anschluss zu einer Gießharke 400 darstellt. In FIG. 5 sind es drei Austragsleitungen 300. Zum Beispiel (FIG. 3) kann es sich um zwei Austragsleistungen handeln, es können - wie in FIG. 5 - auch drei Austragsleistungen zu drei Gießharken oder Gießharkenpaaren oder auch eine Austragsleistung zu einer Gießharke oder Gießharkenpaar (FIG. 4) zugeordnet sein. Die Austragsleitungen 300 können flexibel oder starr ausgeführt sein, wobei flexible Austragsleitungen bevorzugt sind.

In FIG. 5 ist ein möglicher Verteiler 230, der die aus den Mischköpfen austretenden Produktströme homogenisiert und wieder verteilt, detaillierter gezeigt. Hier ist er so aufgebaut, dass zwei Verteilerköpfe 231, 232, wie sie beispielswiese in der EP 1 857 248 A2 ([0023], Fig. 1) unter der Bezeichnung "Verteilerkopf" beschrieben sind, hintereinandergeschaltet werden. Dabei wird der erste Verteilerkopf 231 in umgedrehter Richtung durchströmt, d.h. die aus den Mischköpfen kommenden Produktströme treten über die mehreren Öffnungen in den ersten (umgedrehten) Verteilerkopf ein, werden dort homogenisiert und verlassen den Verteilerkopf als ein Produktstrom, der dann in einen weiteren Verteilerkopf 232 eintritt, wo er wieder auf mehrere Produktströme verteilt wird. Wird wie in Fig. 3 auf nur zwei Produktströme bzw. Austragsleitungen 300 aufgeteilt, kann statt des weiteren Verteilerkopfs 232 auch einfach eine Rohrleitungsverzweigung wie ein T-Stück oder ein Y-Stück, insbesondere eine T-förmige Verzweigung der Austragsleitung genutzt werden. Wird wie in FIG. 4 dargestellt der Produktstrom nur einer Austragsleitung zugetragen (in diesem Fall direkt der Gießharke), so kann der weitere Verteilerkopf 232 ganz entfallen.

Die Reaktionsmischung verlässt die einzelnen Austragsöffnungen 400 der Gießharken 500, 510, 520, 530 und kontaktiert eine nicht dargestellte, sich von den Austragsöffnungen fortbewegende Deckschicht. Durch die Expansion der schäumenden Reaktionsmischung vereinigen sich die einzelnen Streifen der Reaktionsmischung zur Schaumschicht 600 auf der Deckschicht.

Die mit der zuvor diskutierten Vorrichtung durchführbare Ausführungsform des Verfahrens umfasst weiterhin die Schritte:
- Bereitstellen einer Mehrzahl von Mischköpfen 100, 110, 120, wobei jeder Mischkopf eingerichtet ist, um zwei oder mehr Eduktströme zu einem Produktstrom zu mischen;
- Bereitstellen eines Verteilers 230, wobei der Verteiler eine oder mehrere Austragsleitungen 300 aufweist, der Verteiler mit den Produktströmen der Mischköpfe 100, 110, 120 verbunden ist und der Verteiler eingerichtet ist, um die Produktströme der Mischköpfe 100, 110, 120 zu vereinigen und hinsichtlich der stofflichen Zusammensetzung homogen auf die eine oder mehrere Austragsleitungen 300 zu verteilen;
- Bereitstellen einer oder mehrerer Gießharken 510, 520, wobei die Anzahl der Gießharken der Anzahl der Austragsleitungen 300 des Verteilers 230 entspricht, jede Gießharke mit einer Austragsleitung verbunden ist und jede Gießharke ≥ 4 Austragsöffnungen (400) aufweist;
- Mischen von zwei oder mehr Eduktströmen in jedem der Mischköpfe 100, 110, 120 unter Erhalt eines jeden der Mischköpfe verlassenden Produktstroms, wobei der Produktstrom eine schäumbare Reaktionsmischung umfasst;
- Vereinigen der Produktströme in dem Verteiler 230;
- Verteilen der vereinigten Produktströme auf die eine oder mehrere Austragsleitungen 300 des Verteilers 230;
- Auftragen der Reaktionsmischung aus den Austragsöffnungen 400 der einen oder mehreren Gießharken 510, 520 auf die Deckschicht.

Die Anzahl der Mischköpfe in diesen Ausführungsformen der erfindungsgemäßen Vorrichtung und des erfindungsgemäßen Verfahrens kann 2, 3 (wie hier dargestellt), 4, 5, 6 oder noch größer sein. Die Anzahl der Gießharken kann 3, (wie in FIG. 2 dargestellt), 2 (wie in FIG. 3 dargestellt), 4, 5, 6 oder noch größer sein. Die Anzahl der Öffnungen pro Gießharke kann 4, 5 (wie hier dargestellt), 6, 7, 8, 9, 10 oder noch größer sein. In einer bevorzugten Ausführungsform enthält die erfindungsgemäße Vorrichtung 2, 3 oder 4 Mischköpfe und nur eine Gießharke bzw. ein Gießharkenpaar (wie in FIG. 4 dargestellt).

Hier einsetzbare Gießharken können beispielsweise als Einzelgießharke oder Gießharkenpaare, wie in EP 1 857 248 A2, EP 2 614 944 A1 oder EP 2 804 736 A1 beschrieben, ausgeführt sein. Der Zulauf zu der/den Gießharken kann beispielsweise mittig oder seitlich sein. Diese Auftragsmethodik kann für die Herstellung von Metallpaneel-Sandwichverbundelementen, Dämmplatten und Konti-Blöcken verwendet werden.

Bei dieser Ausführungsform werden ebenfalls die Unterschiede zwischen den ursprünglichen Reaktionsgemischen ausgeglichen und Probleme mit Verlaufen und Ineinander-Laufen des aufsteigenden Reaktionsgemischs sehr deutlich reduziert. Diese Ausführungsform hat den zusätzlichen Vorteil, dass man im Grunde nur mit einer Qualität des Reaktionsgemischs arbeiten muss. Ein weiterer Vorteil gegenüber bestehenden Auslaufsystemen ist, dass man eine genaue Positionierung der Auslaufströme, sowohl symmetrisch als auch asymmetrisch, durch die Verwendung von vorzugsweise flexiblen Schläuchen erreichen kann. Dieses kann zu Vorteilen in der Plattengeometrie führen oder es erlaubt eine gezielte Produktaufbringung, zum Beispiel in einer unsymmetrischen Dachplatte.

Es ist möglich, dass im Vorrichtung und im Verfahren wenigstens zwei Gießharken 520 eingesetzt werden und wenigstens zwei der Gießharken 520 quer zur Bewegungsrichtung der Deckschicht gesehen nebeneinander angeordnet sind und in Bewegungsrichtung der Deckschicht gesehen hintereinander angeordnet sind. Diese Anordnung ist in FIG. 2 dargestellt. Die drei Gießharken 520 sind in FIG. 2 im Wesentlichen nebeneinander angeordnet. Dass die mittlere Gießharke etwas nach hinten versetzt ist, soll die Umstände verdeutlichen, dass solche Gießharken gewisse Raumerfordernisse haben, die eine Positionierung direkt nebeneinander gegebenenfalls ausschließen.

Es ist ebenfalls möglich, dass in der Vorrichtung und im Verfahren wenigstens zwei Gießharken 510, 520 eingesetzt werden und wenigstens zwei der Gießharken 510, 520 in Bewegungsrichtung der Deckschicht gesehen direkt hintereinander oder leicht versetzt hintereinander angeordnet sind, so dass aus den Austragsöffnungen 400 einer Gießharke 510 ausgetragene Reaktionsmischung zumindest teilweise aus den Austragsöffnungen 400 der anderen Gießharke 520 ausgetragene Reaktionsmischung kontaktiert. Diese Anordnung ist in FIG. 3 dargestellt. Es kann die aus Gießharke 510 in Strömen austretende Reaktionsmischung zwischen die Ströme aus der anderen Gießharke 520 fließen, so dass man eine noch bessere Verfließung der Ströme erreicht.

Die Reaktionsmischung verlässt die einzelnen Austragsöffnungen 400, 410, 420 der Gießharken 500, 510, 520, 530 und kontaktiert eine durch ihren gestrichelten Umriss dargestellte, sich von den Austragsöffnungen fortbewegende Deckschicht 10 im Wesentlichen in ihrer gesamten Breite. Durch die Expansion der schäumenden Reaktionsmischung vereinigen sich die einzelnen Streifen der Reaktionsmischung zur Schaumschicht 610, 620, 630 auf der Deckschicht 10.

Die gegebenenfalls vorhandene leichte Versetzung der Gießharken zueinander ist in ihrer Größenordnung abhängig von der Anzahl der Gießharken und des Abstands der Austrittsöffnungen. In einer besonders bevorzugten Ausführungsform beträgt die Versetzung der Gießharken zueinander maximal eine Länge, die 50 % des Abstands zweier benachbarter Austrittsöffnungen der Gießharken entspricht. Bei der Verwendung von drei Gießharken 510,520,530 ist eine bevorzugte Anordnung, dass die drei Gießharken zueinander jeweils um eine Länge versetzt, welche ca. 1/3 des Abstands zweier benachbarter Austrittsöffnungen 400 der Gießharken entspricht. Diese Anordnung ist in FIG. 5 dargestellt. Die einzelnen Streifen der Reaktionsmischung 710, 720, 730 vereinigen sich dann wieder zu einer Schaumschicht 630.

Bei allen ausgeführten Austragssystemen kann der Auftrag in und gegen die Bandrichtung ausgeführt werden. Selbst in einer Ausführungsform, wie in einer der Figuren dargestellt, kann es vom Vorteil sein, dass nicht alle Gießharken mit dem gleichen Winkel zur Deckschicht platziert werden.

## Patentansprüche

1. Verfahren zum Auftragen einer schäumbaren Reaktionsmischung auf eine sich bewegende Deckschicht (10), wobei die Reaktionsmischung aus Austragsöffnungen (400) auf die Deckschicht aufgetragen wird und die Deckschicht sich mit einer Geschwindigkeit von ≥ 15 Metern pro Minute relativ zu den Austragsöffnungen (400) bewegt,
wobei die Reaktionsmischung aus ≥ 7 Austragsöffnungen (400) gleichzeitig auf die Deckschicht (10) aufgetragen wird,
weiterhin umfassend die Schritte:
- Bereitstellen einer Mehrzahl von Mischköpfen (100, 110, 120), wobei jeder Mischkopf eingerichtet ist, um zwei oder mehr Eduktströme zu einem Produktstrom zu mischen;
- Bereitstellen eines Verteilers (230), wobei der Verteiler eine oder mehrere Austragsleitungen (300) aufweist, der Verteiler mit den Produktströmen der Mischköpfe (100, 110, 120) verbunden ist und der Verteiler eingerichtet ist, um die Produktströme der Mischköpfe (100, 110, 120) zu vereinigen und hinsichtlich der stofflichen Zusammensetzung homogen auf die eine oder mehrere Austragsleitungen (300) zu verteilen;
- Bereitstellen einer oder mehrerer Gießharken (510, 520), wobei die Anzahl der Gießharken der Anzahl der Austragsleitungen (300) des Verteilers (230) entspricht, jede Gießharke mit einer Austragsleitung verbunden ist und jede Gießharke ≥ 4 Austragsöffnungen (400) aufweist;
- Mischen von zwei oder mehr Eduktströmen in jedem der Mischköpfe (100, 110, 120) unter Erhalt eines jeden der Mischköpfe verlassenden Produktstroms, wobei der Produktstrom eine schäumbare Reaktionsmischung umfasst;
- Vereinigen der Produktströme in dem Verteiler (230);
- Verteilen der vereinigten Produktströme auf die eine oder mehrere Austragsleitungen (300) des Verteilers (230);
- Auftragen der Reaktionsmischung aus den Austragsöffnungen (400) der einen oder mehreren Gießharken (510, 520) auf die Deckschicht (10).

2. Verfahren gemäß Anspruch 1, wobei wenigstens zwei Gießharken (510, 520) eingesetzt werden und wenigstens zwei der Gießharken (510, 520) quer zur Bewegungsrichtung der Deckschicht (10) gesehen nebeneinander angeordnet sind und in Bewegungsrichtung der Deckschicht (10) gesehen hintereinander angeordnet sind.

3. Verfahren gemäß Anspruch 2, wobei die wenigstens zwei Gießharken (510, 520) um eine Länge, welche maximal 50 % des Abstands zweier benachbarter Austragsöffnungen (400) der Gießharken (510, 520) beträgt, versetzt zueinander angeordnet sind.

4. Verfahren gemäß einem der vorhergehenden Ansprüche, wobei die Reaktionsmischung ein Polyol, ein Polyisocyanat und ein Treibmittel umfasst.

5. Vorrichtung zum Auftragen einer schäumbaren Reaktionsmischung auf ein sich bewegendes Deckschicht, wobei die Reaktionsmischung aus Austragsöffnungen (400) auf die Deckschicht (10) aufgetragen wird,
wobei die Vorrichtung ≥ 7 Austragsöffnungen (400) umfasst und weiterhin umfasst:
- eine Mehrzahl von Mischköpfen (100, 110, 120), wobei jeder Mischkopf eingerichtet ist, um zwei oder mehr Eduktströme zu einem Produktstrom zu mischen;
- einen Verteiler (230), wobei der Verteiler eine oder mehrere Austragsleitungen (300) aufweist, der Verteiler mit den Produktströmen der Mischköpfe (100, 110, 120) verbunden ist und der Verteiler eingerichtet ist, um die Produktströme der Mischköpfe (100, 110, 120) zu vereinigen und hinsichtlich der stofflichen Zusammensetzung homogen auf die eine oder mehrere Austragsleitungen (300) zu verteilen;
- eine oder mehrere Gießharken (510, 520), wobei die Anzahl der Gießharken der Anzahl der Austragsleitungen (300) des Verteilers (230) entspricht, jede Gießharke mit einer Austragsleitung verbunden ist und jede Gießharke ≥ 4 Austragsöffnungen (400) aufweist.

## Claims

1. Process for applying a foamable reaction mixture onto a moving outerlayer (10), wherein the reaction mixture is applied onto the outerlayer from discharge openings (400) and the outerlayer moves at a speed of ≥ 15 metres per minute relative to the discharge openings (400),
wherein
the reaction mixture is applied onto the outerlayer (10) from ≥ 7 discharge openings (400) simultaneously, further comprising the steps of:
- providing a plurality of mixing heads (100, 110, 120), wherein each mixing head is configured for mixing two or more reactant streams to afford one product stream;
- providing a distributor (230), wherein the distributor comprises one or more discharge conduits (300), the distributor is connected to the product streams from the mixing heads (100, 110, 120) and the distributor is configured for combining the product streams from the mixing heads (100, 110, 120) and distributing them to the one or more discharge conduits (300) in homogeneous material composition;
- providing one or more rake applicators (510, 520), wherein the number of rake applicators corresponds to the number of discharge conduits (300) of the distributor (230), each rake applicator is connected to a discharge conduit and each rake applicator has ≥ 4 discharge openings (400);
- mixing two or more reactant streams in each of the mixing heads (100, 110, 120) to obtain a product stream exiting each of the mixing heads, wherein the product stream comprises a foamable reaction mixture;
- combining the product streams in the distributor (230) ;
- distributing the combined product streams to the one or more discharge conduits (300) of the distributor (230) ;
- applying the reaction mixture from the discharge openings (400) of the one or more rake applicators (510, 520) onto the outerlayer (10).

2. Process according to Claim 1, wherein at least two rake applicators (510, 520) are employed and at least two of the rake applicators (510, 520) are arranged side-byside viewed transversely to the direction of movement of the outerlayer (10) and are arranged one behind the other viewed in the direction of movement of the outerlayer (10) .

3. Process according to Claim 2, wherein the at least two rake applicators (510, 520) are arranged offset with respect to one another by a length which is not more than 50% of the distance between two adjacent discharge openings (400) of the rake applicators (510, 520).

4. Process according to any of the preceding claims, wherein the reaction mixture comprises a polyol, a polyisocyanate and a blowing agent.

5. Apparatus for applying a foamable reaction mixture onto a moving outerlayer, wherein the reaction mixture is applied onto the outerlayer (10) from discharge openings (400),
wherein
the apparatus comprises ≥ 7 discharge openings (400) and further comprises:
- a plurality of mixing heads (100, 110, 120), wherein each mixing head is configured for mixing two or more reactant streams to afford one product stream;
- a distributor (230), wherein the distributor comprises one or more discharge conduits (300), the distributor is connected to the product streams from the mixing heads (100, 110, 120) and the distributor is configured for combining the product streams from the mixing heads (100, 110, 120) and distributing them to the one or more discharge conduits (300) in homogeneous material composition;
- one or more rake applicators (510, 520), wherein the number of rake applicators corresponds to the number of discharge conduits (300) of the distributor (230), each rake applicator is connected to a discharge conduit and each rake applicator has ≥ 4 discharge openings (400).

## Revendications

1. Procédé d'application d'un mélange réactionnel moussant sur une couche de revêtement mobile (10), le mélange réactionnel qui provient des ouvertures de sortie (400) étant appliqué sur la couche de revêtement et la couche de revêtement se déplaçant à une vitesse ≥ 15 mètres par minute par rapport aux ouvertures de sortie (400),
le mélange réactionnel qui provient de ≥ 7 ouvertures de sortie (400) étant appliqué simultanément sur la couche de revêtement (10),
le procédé comprenant en outre les étapes suivantes :
- fournir une pluralité de têtes de mélange (100, 110, 120), chaque tête de mélange étant conçue pour mélanger deux flux d'éduit ou plus pour former un flux de produit ;
- fournir un distributeur (230), le distributeur comportant une ou plusieurs conduites de sortie (300), le distributeur étant relié aux flux de produit des têtes de mélange (100, 110, 120) et le distributeur étant conçu pour réunir les flux de produit des têtes de mélange (100, 110, 120) et pour les distribuer de manière homogène en termes de composition de substances sur l'une ou plusieurs conduites de sortie (300) ;
- fournir un ou plusieurs râteaux de coulée (510, 520), le nombre de râteaux de coulée correspondant au nombre de conduites de sortie (300) du distributeur (230), chaque râteau de coulée étant relié à une conduite de sortie et chaque râteau de coulée comportant ≥ 4 ouvertures de sortie (400) ;
- mélanger deux flux d'éduit ou plus dans chacune des têtes de mélange (100, 110, 120) pour obtenir un flux de produit sortant de chacune des têtes de mélange, le flux de produit comprenant un mélange réactionnel moussant ;
- réunir les flux de produits dans le distributeur (230) ;
- distribuer les flux de produits réunis sur l'une ou plusieurs conduites de sortie (300) du distributeur (230) ;
- appliquer le mélange réactionnel depuis les ouvertures de sortie (400) d'un ou plusieurs râteaux de coulée (510, 520) sur la couche de revêtement (10).

2. Procédé selon la revendication 1, au moins deux râteaux de coulée (510, 520) étant utilisés et au moins deux des râteaux de coulée (510, 520) étant disposés l'un à côté de l'autre lorsque l'on observe transversalement au sens de déplacement de la couche de revêtement (10) et l'une derrière l'autre lorsque l'on observe dans le sens de déplacement de la couche de revêtement (10).

3. Procédé selon la revendication 2, les au moins deux râteaux de coulée (510, 520) étant disposés en étant décalés l'un de l'autre d'une longueur qui est au maximum de 50 % de la distance entre deux ouvertures de sortie adjacentes (400) des râteaux de coulée (510, 520) .

4. Procédé selon l'une des revendications précédentes, le mélange réactionnel comprenant un polyol, un polyisocyanate et un agent moussant.

5. Dispositif d'application d'un mélange réactionnel moussant sur une couche de revêtement mobile, le mélange réactionnel étant appliqué sur la couche de revêtement (10) à partir des ouvertures de sortie (400) ,
le dispositif comprend ≥ 7 ouvertures de sortie (400) et comprenant en outre :
- une pluralité de têtes de mélange (100, 110, 120), chaque tête de mélange étant conçue pour mélanger deux flux d'éduit ou plus afin de former un flux de produit ;
- un distributeur (230), le distributeur comportant une ou plusieurs conduites de sortie (300), le distributeur étant relié aux flux de produit des têtes de mélange (100, 110, 120) et le distributeur étant conçu pour réunir les flux de produit des têtes de mélange (100, 110, 120) et pour les distribuer de manière homogène en termes de composition de substances sur l'une ou plusieurs conduites de sortie (300) ;
- un ou plusieurs râteaux de coulée (510, 520), le nombre de râteaux de coulée correspondant au nombre de conduites de sortie (300) du distributeur (230), chaque râteau de coulée étant relié à une conduite de sortie et chaque râteau de coulée comportant ≥ 4 ouvertures de sortie (400).
